# DEMANDE DE BREVET EUROPEEN

(11) **EP 1 039 765 A1**
(43) Date de publication de la demande: **27.09.2000**
(21) Numéro de dépôt: 00400384.4
(22) Date de dépôt: 10.02.2000
(51) Int. Cl.: H04Q 3/62, H04M 15/34, H04M 1/66

(54) **Gestion d'un lien téléphonique dynamique multivoie**

(30) Priorité: 22.03.1999 FR 9903515
(71) Demandeur: ALCATEL, 75008 Paris (FR)
(72) Inventeur: Litteaut, Jacques, 78160 Marly le Roi (FR); Tran, Nhut Quan, 95800 Cergy (FR)
(74) Mandataire: Fournier, Michel

(57) **Abrégé**

Le lien de cette invention établit provisoirement un support (SA,SE,SB) reliant deux noeuds (U,V) d'un réseau téléphonique (RP) et incluant plusieurs voies aptes chacune à supporter une communication entre ces deux noeuds. Plusieurs contrôleurs temporisés (J1,...J3) sont respectivement associés à ces voies et prennent chacun soit un état de mesure, soit un état de dépassement, soit un état de latence selon que, soit une communication est supportée par la voie associée à ce contrôleur depuis un temps inférieur à une durée autorisée, soit une communication est supportée par cette voie depuis un temps au moins égal à cette durée autorisée, soit aucune communication n'est supportée par cette voie, respectivement. Ce support est supprimé chaque fois qu'aucun de ces contrôleurs temporisés n'est dans son état de mesure.

Cette invention s'applique notamment aux réseaux privés comportant un lien dynamique passant par un réseau public (RE).

## Description

La présente invention trouve application dans les réseaux téléphoniques et plus particulièrement dans ceux des réseaux téléphoniques privés qui ont recours à un réseau téléphonique public pendant des périodes limitées pour acheminer certaines communications. D'un point de vue économique il est connu qu'un tel recours à un réseau public se justifie dans le cas de certains réseaux privés parce que son coût global est inférieur à celui des investissements qui auraient dû être réalisés dans ce réseau privé pour y permettre un acheminement interne de toutes les communications souhaitées. Pour que ce recours puisse être effectué chaque fois qu'il apparaît nécessaire, le réalisateur d'un tel réseau privé y incorpore des moyens qui peuvent être désignés par l'expression « lien dynamique ». Un tel lien est apte à créer, pour une communication à établir, un « support » sur lequel les paroles ou les données de cette communication seront échangées entre deux noeuds du réseau. Lorsqu'il existe, ce support utilise, au moins sur une partie intermédiaire de son trajet, des moyens appartenant au réseau public. Le coût de cette utilisation est facturé au propriétaire de ce réseau privé et il croît avec le temps pendant lequel ces moyens sont utilisés. C'est pourquoi ce lien est un lien du type dit « dynamique » apte à supprimer et à rétablir ce support.

L'établissement de ce support est typiquement effectué chaque fois qu'une communication doit être établie sur ce support entre les deux dits noeuds alors que ce support a été précédemment supprimé. Sa suppression est effectuée chaque fois qu'aucune communication n'y est plus en cours.

Un lien dynamique peut être « multivoie ». Le support qu'il est apte à établir permet alors l'acheminement simultané de plusieurs communications téléphoniques entre les deux noeuds reliés par ce lien.

Il a été constaté que l'existence du support d'un lien dynamique multivoie était parfois inutilement prolongée parce que des utilisateurs dudit réseau privé oubliaient de couper des communications empruntant ce support. C'est pourquoi un procédé de fonctionnement connu d'un tel lien vise à obtenir un avantage financier en limitant la durée de telles prolongations inutiles. Selon ce procédé connu, dans le cas où une seule communication est en cours sur ledit support, ce support est supprimé lorsque le temps qui s'est écoulé depuis le début de cette communication atteint une durée autorisée prédéterminée telle qu'une heure. Dans le cas où plusieurs communications sont simultanément en cours et ont eu des débuts respectifs différents les uns des autres, ce procédé connu fait que ce support est supprimé lorsque le temps qui s'est écoulé depuis le dernier de ces débuts atteint la durée autorisée.

Ce procédé connu présente un avantage dans le cas où d'une part une communication atteint à un certain instant cette durée autorisée alors que, d'un point de vue technique, il serait utile qu'elle puisse dépasser cette durée et où d'autre part une autre communication atteint au même instant une durée inférieure à cette durée autorisée. Cet avantage est que, dans ce cas, une coupure inutile du point de vue financier est évitée pour la première de ces deux communications.

Ce procédé connu présente cependant l'inconvénient qu'en présence d'une telle première communication, l'existence du support est trop souvent prolongée d'une manière excessive et éventuellement perpétuelle par l'établissement d'autres communications alors que ces autres communications ont eu des durées très inférieures à la durée autorisée et ont laissé entre elles des intervalles pendant lesquels seule cette première communication est restée en cours.

La présente invention a pour but général de limiter le coût de fonctionnement d'un lien téléphonique dynamique multivoie tout en limitant le risque de couper une communication utile.

Elle a plus particulièrement pour but de conserver l'avantage ci-dessus dudit procédé connu tout en évitant son dit inconvénient.

Et dans ces buts elle a notamment pour objet un lien téléphonique dynamique multivoie, ce lien incluant des moyens pour établir provisoirement un support reliant deux noeuds d'un réseau téléphonique incluant une pluralité de voies aptes chacune à supporter une communication entre ces deux noeuds, ce lien incluant en outre :
- une pluralité de contrôleurs temporisés respectivement associés à ces voies et aptes chacun à prendre soit un état de mesure, soit un état de dépassement, soit un état de latence selon que, soit une communication est supportée par la voie associée à ce contrôleur depuis un temps inférieur à une durée autorisée, soit une communication est supportée par cette voie depuis un temps au moins égal à cette durée autorisée, soit aucune communication n'est supportée par cette voie, respectivement, et
- des moyens pour supprimer ledit support internodal chaque fois qu'aucun desdits contrôleurs temporisés n'est dans son dit état de mesure.

A l'aide des figures schématiques 1 à 3 ci-jointes on va exposer ci-après, à simple titre d'exemple, comment cette invention peut être mise en oeuvre.

La figure 1 représente le schéma d'un lien selon l'invention.

La figure 2 représente un diagramme temporel du fonctionnement d'un lien téléphonique dynamique multivoie selon ledit procédé connu.

La figure 3 représente à la fois un diagramme temporel du fonctionnement du lien de la figure 1 et une échelle de temps commune aux figures 2 et 3.

De même qu'un lien téléphonique dynamique multivoie connu, le lien de cette invention est constitué par un système programmé apte notamment à effectuer des opérations alternées d'établissement et de suppression de support pour respectivement faire exister et faire cesser d'exister un support internodal constitué de trois tronçons SU,SE et SV. Ce support est un support de communication reliant l'un à l'autre deux ports PU et PV appartenant respectivement à deux noeuds U et V tels que deux centraux du genre PABX inclus dans un même réseau téléphonique privé RP. Chacun de ces deux noeuds inclut une pluralité de postes tels que U1,...U4 et V1...V4, commandés par des utilisateurs respectifs, hommes, machines ou systèmes, pour permettre à ces utilisateurs d'échanger des paroles ou des données. Certains de ces échanges sont effectués sous la forme de communications internodales réalisées chacune entre d'une part un poste appelant propre à cette communication et appartenant à un noeud appelant constitué par l'un des deux dits noeuds, d'autre part un poste appelé propre à cette communication et appartenant à un noeud appelé constitué par l'autre des deux dits noeuds. Chacun des dits postes peut jouer aussi bien le rôle de poste appelant et que celui de poste appelé.

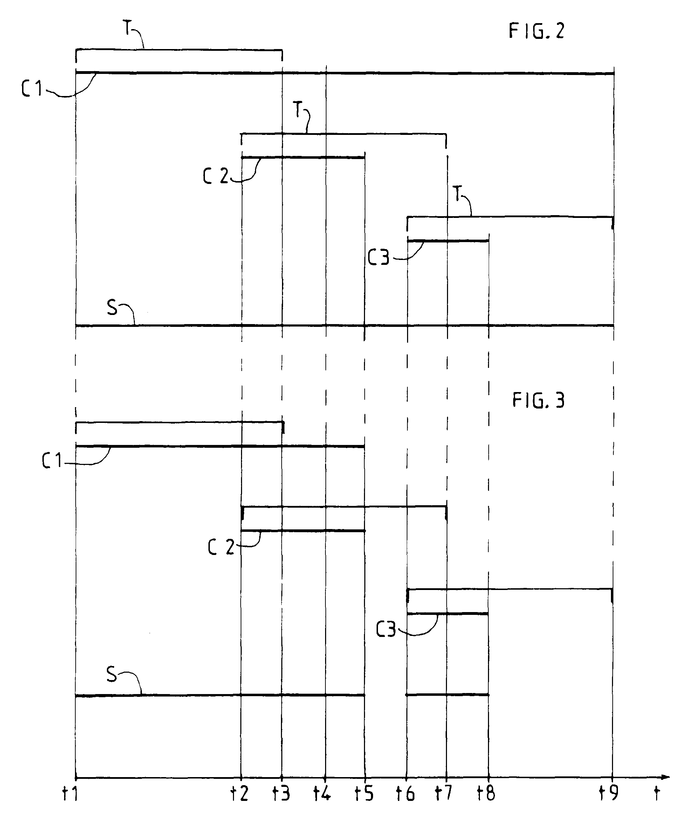

Chaque communication internodale est classiquement réalisée à la suite d'un appel pour cette communication, cet appel étant formé par le dit poste appelant et désignant ledit noeud et ledit poste appelés. Cette communication a ensuite un début. A partir de ce début elle est « en cours », c'est à dire qu'elle permet l'échange de paroles et/ou de données entre ces postes appelant et appelé. Elle se termine enfin par une coupure. Cette coupure d'une communication telle que C2 ou C3 sur les figures 2 et 3 peut être une coupure volontaire survenant à un instant tel que t5 ou t8, et provoquée par l'un ou l'autre de ces deux postes appelant et appelé. Cette coupure d'une communication telle que C1 peut aussi être une coupure autoritaire survenant à un instant tel que t5 et provoquée par une suppression du support internodal.

Chacun des deux noeuds U et V répond à chaque appel pour une communication internodale en reliant son port PU ou PV à celui des postes appelant et appelé de cette communication qui appartient à ce noeud. Dans le cas du noeud appelé l'appel peut être reçu par ce noeud par l'intermédiaire du support internodal si ce dernier existe à ce moment là, mais il peut aussi être reçu par l'intermédiaire d'un autre moyen appartenant au réseau privé RP.

Le procédé de fonctionnement de ce lien inclut diverses opérations en réponse à chaque appel pour une communication internodale, et cela aussi bien s'il s'agit du procédé selon cette invention que s'il s'agit du dit procédé connu .

Une première telle opération est l'établissement du support internodal SU,SE,SV si ce support n'existe pas à l'instant de cet appel. Ce support inclut une pluralité de voies aptes chacune à permettre une communication entre les deux ports. Le nombre de voies est typiquement compris entre deux et trente. Ce support inclut par exemple six voies prévues pour l'échange de paroles et une voie prévue pour un échange de données en paquets selon le protocole X25. Il est dit « compressé » en ce sens que chaque communication est comprimée dans des intervalles de temps qui sont séparés les uns des autres et dont la durée commune est de l'ordre de 32 ms. Une pluralité de tels intervalles est respectivement affectée à la pluralité des voies du support au cours d' un cycle de transmission. De tels cycles se succèdent périodiquement les uns aux autres tant que ce support existe.

Ce support emprunte typiquement un trajet dont une partie au moins SE appartient à un réseau téléphonique public RE, c'est à dire qu'elle est constituée par des moyens tels que des lignes et des commutateurs de ce réseau. L'utilisation de ces moyens est facturée au propriétaire du réseau R P. Ce support a donc pour ce dernier un coût qui croit avec la durée de son existence.

Son établissement, son fonctionnement et sa destruction sont commandés par un organe de gestion de lien L qui est informé par les ports PA et PB. Le moyen utilisé pour réaliser cet établissement ou cette destruction est symboliquement représenté sous la forme de deux interrupteurs QU et QV qui sont ouverts ou fermés simultanément sur commande de cet organe de gestion.

Une deuxième opération effectuée en réponse à un appel est l'affectation de l'une des voies du support internodal à la communication pour laquelle cet appel a été formé. C'est cette affectation qui définit ledit début de cette communication. Elle résulte d'une coopération de l'organe de gestion L avec les ports PA et PB. Elle n'est bien entendu effectuée que dans le cas où une telle voie est disponible dans ce support. Dans le cas contraire où toutes les voies de ce support sont déjà occupées par les communications en cours, l'appel n'aboutit pas, sauf si un autre moyen que ledit support internodal peut être utilisé pour établir la communication demandée par cet appel.

Le procédé inclut ensuite une opération de mesure de temps de communication. Cette opération comporte la mesure du temps qui s'est écoulé depuis le début de la communication internodale. Ce temps sera appelé ci-après « temps mesuré ». Dans le lien connu ci-dessus le temps mesuré est celui qui s'est écoulé depuis le dernier des débuts respectifs des communications internodales.

Le procédé comporte enfin des opérations de suppression du support internodal. Ces opérations incluent des suppressions « autoritaires » et des suppressions « normales ».

Une suppression autoritaire est effectuée chaque fois que le dit temps mesuré dépasse une durée autorisée prédéterminée. Cette durée autorisée est par exemple comprise entre 10 et 200 minutes et plus particulièrement entre 30 et 120 minutes. Elle est choisie par le réalisateur dudit réseau privé selon la nature du travail des utilisateurs de ce réseau.

Une suppression normale est effectuée chaque fois qu'aucune dite communication internodale n'est plus en cours,

Le procédé selon cette invention est caractérisé par le fait que la dite opération de mesure de temps de communication comporte la mesure de chacun des temps qui se sont écoulés depuis les dits débuts respectifs des communications qui sont en cours, chacun de ces temps constituant un dit temps mesuré, ladite opération de suppression autoritaire du support internodal étant effectuée chaque fois que chacun des dits temps mesurés dépasse la dite durée autorisée .

L'opération de mesure du temps de communication est effectuée par les contrôleurs temporisés J1,....J3 qui ont été précédemment mentionnés et qui sont inclus dans l'organe de gestion L. Elle est matérialisée par le fait que chacun de ces contrôleurs prend soit un état de mesure, soit un état de dépassement, soit un état de latence selon que, soit une communication est supportée par la voie associée à ce contrôleur depuis un temps inférieur à la durée autorisée T, soit une communication est supportée par cette voie depuis un temps au moins égal à cette durée autorisée, soit aucune communication n'est supportée par cette voie, respectivement. L'opération de suppression autoritaire est alors effectuée chaque fois qu'une ou plusieurs communications sont en cours et que chacune de ces communications dure depuis un temps supérieur à la durée autorisée, c'est à dire chaque fois que tous les contrôleurs associés aux voies supportant ces communications sont en état de dépassement, les éventuels autres contrôleurs étant dans leur état de latence.

Quant à l'opération de suppression normale, elle est effectuée dès que tous les contrôleurs sont dans leur état de latence. Il en résulte qu'une opération de suppression, autoritaire ou normale, est effectuée chaque fois que chacun des contrôleurs est, soit son état de dépassement, soit dans un état de latence, c'est à dire chaque fois qu'aucun de ces contrôleurs n'est dans son état de mesure.

Ces contrôleurs sont typiquement réalisés par des éléments de programmes inscrits dans les centraux téléphoniques qui constituent les noeuds U et V. Ils peuvent présenter la forme d'entités permanentes définitivement associées chacune à une voie du support. Ils peuvent cependant aussi bien apparaître, du moins lorsqu'ils sont dans leurs états de mesure ou de dépassement, comme réalisés chacun sous la forme d'une entité provisoire créée à l'occasion de l'établissement d'une communication sur une voie du support et associée ainsi à la fois à cette communication et à cette voie, cette entité mesurant le temps à partir de cet établissement et pouvant être appelée « entité provisoire de contrôle de temps ». Une telle entité provisoire est détruite par la coupure de la communication qui lui est associée, mais une entité équivalente sera créée lorsqu'une autre communication sera établie sur la même voie. Dans le cas où un lien dynamique utilise de telles entités provisoires il convient de préciser la nature de l'état de latence qui a été précédemment mentionné comme pouvant être à un instant donné celui de chaque contrôleur temporisé associé à une voie du support. Cet état de latence du contrôleur est simplement constitué dans ce cas par l'absence, au dit instant, de toute entité provisoire de contrôle de temps associée à cette voie.

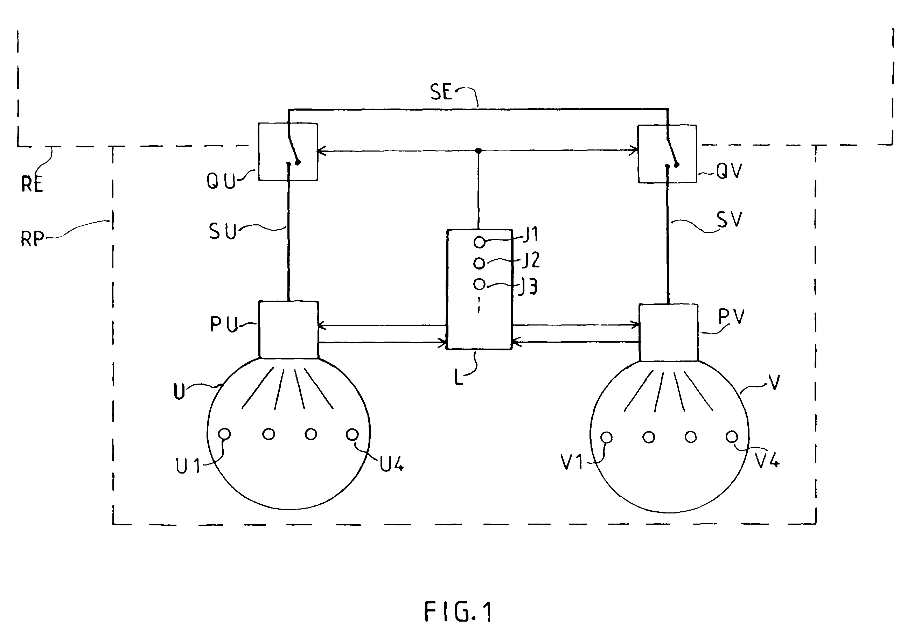

Les deux figures 2 et 3 représentent les deux séquences de fonctionnement d'un lien téléphonique dynamique multivoie faisant respectivement suite à une même séquence d'actions d'utilisateurs de ce lien, les différences entre ces deux séquences de fonctionnement résultant seulement du fait que le lien considéré selon la figure 1 fonctionne selon le procédé connu précédemment mentionné alors que le lien considéré selon la figure 3 fonctionne selon le procédé de la présente invention.

La suite de ces actions des utilisateurs est la suivante :
- Un premier couple d'utilisateurs débute une communication C1 à un instant t1 et la poursuit de manière utile pendant une durée qui s'achève à un instant t4 et qui est supérieure à la durée autorisée T. Cette dernière a été atteinte à un instant t3. A l'instant t4 ce couple d'utilisateurs oublie de couper cette communication de sorte que cette dernière se prolonge d'une manière inutile.
- A un instant t2 antérieur à t3 un deuxième couple d'utilisateurs a débuté une communication C2. L'un d'eux la coupe à un instant t5 postérieur à t4 alors que sa durée n'a pas atteint la durée autorisée qui s' étend jusqu'à un instant t7,
- A un instant t6 antérieur à t7 un troisième couple d'utilisateurs débute une troisième communication C3. l'un d'eux la coupe à un instant t8 alors que sa durée n'a pas atteint la durée autorisée qui s'étend jusqu'à un instant t9.

La durée de chacune de ces communications est représentée par un trait épais « de communication ». Un autre trait épais représente la période d'existence du support internodal S et est désigné par cette même lettre de référence S. Un intervalle de temps égal à la durée autorisée T est représenté par un trait plus fin s'étendant au dessus de chacun des traits de communication à partir du début de la communication correspondante.

Conformément à chacune des figures 2 et 3 la présence de la communication C2 à l'instant t3 empêche que le support S soit supprimé à cet instant et permet ainsi à la communication C1 de se prolonger au delà de la durée autorisée.

Conformément à la seule figure 2, à l'instant t5 où la communication C2 est coupée, le fait que la durée autorisée pour cette dernière communication ne soit pas encore atteinte entraîne le maintien du support S et de la communication C1. A l'instant t7 où cette durée autorisée pour la communication C2 est atteinte, le fait que la communication C3 est en cours entraîne encore le maintien du support S et de la communication C1. A l'instant t8 où la communication C3 est coupée, le fait que la durée autorisée pour cette dernière communication n'est pas encore atteinte entraîne encore ce même maintien. C'est seulement à l'instant t9 que la fin de cette dernière durée autorisée entraîne la suppression autoritaire du support S et la coupure autoritaire correspondante de la communication C1. Ce support a donc été maintenu inutilement en existence pendant les intervalles t5-t6 et t8-t9.

Conformément à la figure 3 cette suppression autoritaire est provoquée dès l'instant t5 parce que, à partir de cet instant, d'abord le seul temps mesuré est celui qui s'écoule depuis le début t1 de la communication C1, ensuite ce temps mesuré a dépassé la durée autorisée T. A aucun instant le support S n'a donc été maintenu inutilement en existence.

Cet exemple donné dans un cas particulier permet de percevoir que, grâce à la présente invention, peu nombreux seront les cas où une communication utile sera coupée par une suppression autoritaire du support S, et limités seront les maintiens inutiles de l'existence de ce support.

## Revendications

1. Lien téléphonique dynamique multivoie, ce lien incluant des moyens pour établir provisoirement un support internodal (SU,SE,SV) reliant deux noeuds (U,V) d'un réseau téléphonique (RP) et incluant une pluralité de voies aptes chacune à supporter une communication (C1,...C3) entre ces deux noeuds,
ce lien étant caractérisé par le fait qu'il inclut en outre :
- une pluralité de contrôleurs temporisés (J1,...J3) respectivement associés à ces voies et aptes chacun à prendre soit un état de mesure, soit un état de dépassement, soit un état de latence selon que, soit une communication est supportée par la voie associée à ce contrôleur depuis un temps inférieur à une durée autorisée (T), soit une communication est supportée par cette voie depuis un temps au moins égal à cette durée autorisée, soit aucune communication n'est supportée par cette voie, respectivement, et
- des moyens (L,QU,QV) pour supprimer ledit support internodal chaque fois qu'aucun desdits contrôleurs temporisés n'est dans son dit état de mesure.

2. Lien selon la revendication 1, ce lien étant caractérisé par le fait qu'il comporte :
- des moyens pour faire apparaître un dit contrôleur temporisé (J1) associé à une dite voie du support internodal (SU,SE,SV), sous la forme d'une entité provisoire de contrôle de temps, au début de chaque dite communication (C1) supportée par cette voie, cette entité étant associée à cette communication et à cette voie, et
- des moyens pour détruire cette entité à la coupure de cette communication, ledit état de latence de ce contrôleur étant réalisé lorsqu'aucune dite entité provisoire de contrôle de temps n'est associée à cette voie.

3. Lien selon l'une quelconque des revendications 1 et 2, ce lien étant caractérisé par le fait que la dite pluralité de voies du support internodal (SU,SE,SV) est réalisée par une affectation répétitive d'une pluralité respective d'intervalles de temps successifs à ces voies sur ce support.

4. Lien selon la revendication 3, le nombre des dites voies du support internodal (SU,SE,SV) étant compris entre deux et trente.

5. Lien selon la revendication 1, ladite durée autorisée (T) étant comprise entre 10 et 200 minutes.

6. Procédé de fonctionnement d'un lien téléphonique dynamique multivoie, ledit lien étant constitué par un système programmé apte notamment à effectuer des opérations alternées d'établissement et de suppression de support pour respectivement faire exister et faire cesser d'exister un support internodal (SU,SE,SV), ce support étant un support de communication reliant l'un à l'autre deux ports (PU,PV) appartenant respectivement à deux noeuds (U,V) d'un réseau téléphonique (RP), chacun de ces deux noeuds incluant une pluralité de postes (U1,...U4,V1...V4) commandés par des utilisateurs respectifs, pour permettre à ces utilisateurs d'échanger des paroles ou des données, des communications internodales étant réalisées chacune entre d'une part un poste appelant propre à cette communication et appartenant à un noeud appelant constitué par l'un des deux dits noeuds, d'autre part un poste appelé propre à cette communication et appartenant à un noeud appelé constitué par l'autre des deux dits noeuds, chacun desdits postes étant apte à constituer un dit poste appelant et à constituer un dit poste appelé, chaque dite communication internodale étant réalisée comme suite à un appel pour cette communication, cet appel étant formé par le dit poste appelant et désignant ledit noeud et ledit poste appelé, cette communication ayant ensuite un début à partir duquel elle est en cours de manière à permettre un échange de paroles et/ou de données entre ces postes appelant et appelé, cette communication se terminant enfin par une coupure, cette coupure d'une communication (C2,C3) pouvant être une coupure volontaire (t5,t8) provoquée par l'un ou l'autre des deux dits postes appelant et appelé, cette coupure d'une communication (C1) pouvant aussi être une coupure autoritaire (t5) provoquée par une suppression du dit support internodal, chacun des deux dits noeuds répondant à chaque dit appel pour une communication internodale en reliant son dit port à celui des postes appelant et appelé de cette communication qui appartient à ce noeud,
le dit procédé de fonctionnement dudit lien incluant les opérations suivantes en réponse à chaque dit appel pour une communication internodale :
- établissement dudit support internodal si ce support n'existe pas, ce support incluant une pluralité de voies aptes chacune à permettre une dite communication entre les deux dits ports, et
- affectation de l'une des dites voies du support à ladite communication pour laquelle ledit appel a été formé de manière à définir ledit début de cette communication,
ce procédé incluant en outre :
- une opération de mesure de temps de communication, cette opération comportant la mesure du temps qui s'est écoulé depuis ledit début d'une communication internodale , ce temps constituant un temps mesuré, et
- des dites opérations de suppression dudit support internodal, ces opérations incluant les suivantes :
- suppression autoritaire, cette opération étant effectuée chaque fois que le dit temps mesuré dépasse une durée autorisée prédéterminée, et
- suppression normale, cette opération étant effectuée dès qu'aucune dite communication internodale n'est plus en cours,
ce procédé étant caractérisé par le fait que la dite opération de mesure de temps de communication comporte la mesure de chacun des temps qui se sont écoulés depuis les dits débuts respectifs des communications qui sont en cours, chacun de ces temps constituant un dit temps mesuré, ladite opération de suppression autoritaire du support internodal étant effectuée chaque fois que chacun des dits temps mesurés dépasse la dite durée autorisée (T).
